# EUROPEAN PATENT SPECIFICATION

(11) **EP 2 533 040 B1**
(45) Date of publication and mention of the grant of the patent: **09.01.2019**
(21) Application number: 12166975.8
(22) Date of filing: 07.05.2012
(51) Int. Cl.: G01N 29/22, G01N 29/28, G01N 29/32, G01N 29/24, G10K 11/02

(54) **Geometry compensating transducer attachments for ultrasonic inspection of chamfers or countersunk surfaces**
Geomtrieausgleichende Transducerbefestigungen für die Ultraschallinspektion von angefasten oder angesenkten Oberflächen
Fixations de transducteur de compensation de géométrie pour inspection ultrasonique de chanfreins ou surfaces fraisées

(30) Priority: 08.06.2011 US 201113156154
(43) Date of publication of application: 12.12.2012
(73) Proprietor: The Boeing Company, Chicago, IL 60606-1596 (US)
(72) Inventor: Kollgaard, Jeffrey R., Seattle, Washington 98178 (US); Fetzer, Barry A., Renton, Washington 98059 (US); Brown, Christopher R., Seattle, Washington 98115 (US); Tapia, William J., Kapowsin, Washington 98344-0022 (US); Brooks, David K., Seattle, Washington 98103 (US)
(74) Representative: Witte, Weller & Partner Patentanwälte mbB

(56) References cited:
- DE-A1- 3 147 900
- US-A- 3 512 400
- US-A- 4 462 256
- US-A1- 2010 046 576

## Description

### TECHNICAL FIELD

The disclosure generally relates to ultrasonic inspection of structures such as composite structures. More particularly, the disclosure relates to geometry compensating transducer attachments which eliminate or reduce refraction and scattering in ultrasonic inspection of laminar structures having chamfers or countersunk surfaces.

### BACKGROUND

In aerospace and other industries it may be occasionally necessary to inspect structures for the presence of irregularities in the structures. Ultrasonic inspection is a technique which is extensively used to inspect composite and other structures for irregularities, since the irregularities tend to be laminar in nature and located parallel to the overlying sound-entry interface (an optimum orientation for ultrasonic detection). However, ultrasonic inspection of irregularities beneath angled interfaces such as chamfers and countersunk surfaces may not be accurate since those types of surfaces tend to refract and scatter the ultrasonic beams which are emitted through the interfaces. Flush fastener holes, existing in the thousands on a typical aircraft, represent a common angled interface, one that is subject to inspection to identify damage caused by drilling or fastener removal.

A variety of methods have been devised to minimize the undesirable effects of refraction and scattering which are caused by angled interfaces in a structure subjected to ultrasonic inspection. One method includes positioning of ultrasonic transducers parallel to the surface of a composite structure and at an angle to the plies of the structure. The ultrasonic beam enters the structure and is channeled by the fibers in the plies. Laminar irregularities in the plies do not return an ultrasonic echo, thus failing to reveal the presence of the irregularities.

Another method involves positioning of ultrasonic transducers parallel to the plies in the structure on a plastic wedge. Due to the velocity difference between the plastic wedge and the carbon fiber material, the ultrasonic beam refracts at an angle to the plies. Laminar irregularities in the plies do not return an ultrasonic echo, thus failing to reveal the presence of the irregularities.

Some solutions have entailed shaped ultrasonic arrays to sweep sound beams through the material. However, these techniques may still produce marginal echo returns from delaminations in the plane of the plies. In other cases, ultrasonic inspection can be performed from a parallel back surface toward the angled surface, but in many such cases, access to the back side of the structure is not possible.

DE 31 47 900 A1 discloses an angular probe comprising an ultrasonic transducer, a delay path and the transmission layer which is attached to the delay path. The transmission layer forms a protective layer for the delay path and permits coupling of the sound to be transmitted into the workpiece.

US 4,462,256 discloses an angle-beam transducer comprising inter alia wedge means embedding a piezoelectric polymer transducer means such that the transducer means is oriented within said wedge means at an angle for generating Rayleigh waves in a metal structure being tested.

Over the years, efforts have been made without success to identify a material that matches the acoustic characteristics of carbon fiber laminate. Due to the ultrasonic velocity and acoustic impedance mismatch between those materials and carbon fiber laminate, those materials will cause refraction and interface energy loss when used as a geometry compensator. With some materials, a suitably-chosen angled transducer interface can result in a perpendicular beam in the laminate, however the acoustic impedance losses due to dissimilar materials at the interface remain. It has been found that a CFRP (Carbon Fiber Reinforcement Polymer) wedge-shaped or plug-shaped transducer attachment essentially restores the structure being inspected to a plate-like configuration, thereby greatly simplifying ultrasonic inspection. The bond line interface between the wedge or plug attachment and the structure has a negligible effect on the ultrasonic beam since there is no refraction or acoustic impedance loss.

Therefore, geometry compensating transducer attachments which eliminate or reduce refraction and scattering in ultrasonic inspection of structures having chamfers or countersunk surfaces are needed.

### SUMMARY

The disclosure is generally directed to a geometry compensating transducer attachment for ultrasonic inspection of a composite structure. The geometry compensating transducer attachment includes a geometry-compensating structure having at least one complementary angled surface configured to engage a slope of the composite structure to be inspected, thereby restoring the composite structure to a plate-like configuration, the geometry compensating structure comprising a plurality of composite plies, wherein the geometry-compensating structure and the composite structure to be inspected are the same material, and the geometry-compensating structure having an acoustic velocity and impedance generally matching the acoustic velocity and impedance of the composite structure to be inspected.

A geometry compensating transducer attachment may be provided including a geometry-compensating structure as defined above; an ultrasonic transducer disposed in contact with the geometry-compensating structure; and an indicator unit interfacing with the ultrasonic transducer.

The disclosure is further generally directed to an ultrasonic inspection method. An illustrative embodiment of the ultrasonic inspection method comprises providing a compo-site structure to be inspected having a sloped surface; providing a geometry-compensating structure having at least one angled complementary surface configured to engage the sloped surface on the composite structure to be inspected, the geometry-compensating structure comprising a plurality of composite plies, the geometry-compensating structure having an acoustic velocity generally matching an acoustic velocity of the structure to be inspected; placing the angled surface of the geometry-compensating structure against the sloped surface of the structure to be inspected; transmitting an ultrasonic beam through the geometry-compensating structure into the structure to be inspected, thereby restoring the composite structure to a plate-like configuration; receiving the ultrasonic beam; and interpreting results based on receiving the ultrasonic beam. Providing a structure to be inspected and providing a geometry-compensating structure comprises providing a composite structure to be inspected and providing a geometry-compensating structure of the same material.

An ultrasonic inspection method may be provided including providing a structure to be inspected having a sloped surface; providing a geometry-compensating structure as defined above; placing the angled surface of the geometry-compensating structure against the sloped surface of the structure to be inspected; transmitting an ultrasonic beam through the geometry-compensating structure into the structure to be inspected; receiving the ultrasonic beam; and interpreting results based on receiving the ultrasonic beam.

### BRIEF DESCRIPTION OF THE ILLUSTRATIONS

FIG. 1 is a perspective view which illustrates ultrasonic inspection of a structure with a chamfer using an illustrative geometry-compensating wedge.
FIGS. 2-4 are cross-sectional views which illustrate ultrasonic inspection of structures with a countersunk surface using illustrative geometry-compensating plugs of various sizes.
FIG. 5 is a flow diagram of an illustrative embodiment of an ultrasonic inspection method.
FIG. 5A is a flow diagram of an alternative illustrative embodiment of an ultrasonic inspection method.
FIG. 6 is a flow diagram of an aircraft production and service methodology.
FIG. 7 is a block diagram of an aircraft.

### DETAILED DESCRIPTION

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to practice the disclosure and are not intended to limit the scope of the claims. Furthermore, there is no intention to be bound by any expressed or implied theory presented in the preceding technical field, background, brief summary or the following detailed description.

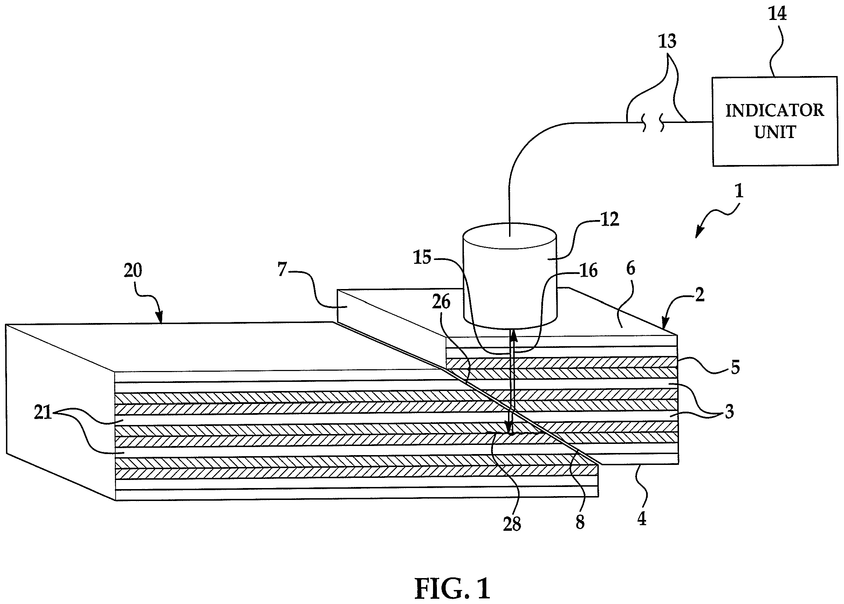

Referring initially to FIG. 1, an illustrative embodiment of a geometry compensating transducer attachment, hereinafter attachment, is generally indicated by reference numeral 1. The attachment 1 may include a geometry-compensating wedge 2. The geometry-compensating wedge 2 may be non-metallic. In some embodiments, the geometry-compensating wedge 2 may be a composite material and may include laminated composite plies 3. The geometry-compensating wedge 2 may include a bottom wedge surface 4, side wedge surfaces 5 and 7 and a top wedge surface 6. The geometry-compensating wedge 2 may have at least one angled surface 8. In some embodiments, an angled wedge surface 8 may extend between the bottom wedge surface 4 and the side wedge surface 7.

The attachment 1 may be used to carry out ultrasonic inspection of a structure 20 as will be hereinafter described. The ultrasonic velocity (speed of acoustic transmission through the geometry-compensating wedge 2) may approximate or generally match the ultrasonic velocity of the structure 20 which is to be inspected. In some embodiments, the structure 20 may be non-metallic. In some embodiments, the structure 20 may be a composite material and may include laminated composite plies 21. The structure 20 may include a chamfer 26 the slope or angle of which generally matches or corresponds to the slope or angle of the complementary angled wedge surface 8 of the geometry-compensating wedge 2 of the attachment 1. An irregularity 28 such as a delamination, for example and without limitation, may exist in the structure 20 beneath the chamfer 26. In some embodiments, the geometry-compensating wedge 2 and the structure 20 which is to be inspected may be the same or substantially the same material.

An ultrasonic transducer 12 may be placed against the top wedge surface 6 of the geometry-compensating wedge 2. An indicator unit 14 may be connected to the ultrasonic transducer 12 through transducer wiring 13 or other suitable connection. An incident ultrasonic beam 15 may be transmitted from the ultrasonic transducer 12. The incident ultrasonic beam 15 may transmit through the interface which is formed by the angled wedge surface 8 on the geometry-compensating wedge 2 and the chamfer 26 on the structure 20 to the irregularity 28 in the structure 20. A reflected ultrasonic beam 16 may be reflected from the irregularity 28 through the interface between the chamfer 26 and the angled wedge surface 8 back to the ultrasonic transducer 12. Based on the modified characteristics of the reflected ultrasonic beam 16 relative to the incident ultrasonic beam 15, the indicator unit 14 may indicate the presence of the irregularity 28 beneath the chamfer 26 on the structure 20.

It will be appreciated by those skilled in the art that the geometry-compensating wedge 2 of the attachment 1 essentially restores the structure 20 which is being inspected to a plate-like configuration, thereby greatly simplifying ultrasonic inspection. Because the geometry-compensating wedge 2 of the attachment 1 is substantially matched to the ultrasonic velocity and acoustic impedance of the structure 20, the incident ultrasonic beam 15 and the reflected ultrasonic beam 16 enter and reflect perpendicular to the carbon composite plies 21 in the structure 20 without refraction and scattering. Therefore, the bond line interface which is formed by the angled wedge surface 8 and the chamfer 26 has a negligible effect on the incident ultrasonic beam 15 and the reflected ultrasonic beam 16.

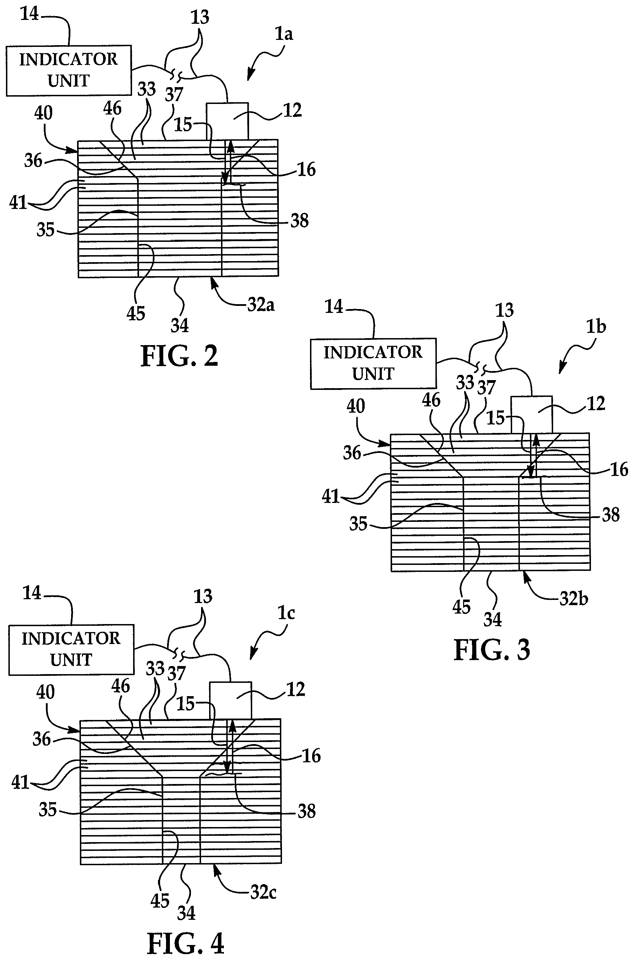

Referring next to FIGS. 2-4, an alternative illustrative embodiment of the geometry-compensating transducer attachment, hereinafter attachment, is generally indicated by reference numeral 1a in FIG. 2. The attachment 1a may include a geometry-compensating plug 32a. The geometry-compensating plug 32a may be non-metallic. In some embodiments, the geometry-compensating plug 32a may be a composite material and may include laminated composite plies 33. The geometry-compensating plug 32a may include a bottom plug surface 34, an annular side plug surface 35 and a top plug surface 37. At least one annular angled plug surface 36 may extend between the top plug surface 37 and the side plug surface 35.

The attachment 1a may be used to carry out ultrasonic inspection of a structure 40 as will be hereinafter described. The ultrasonic velocity of the geometry-compensating plug 32a may approximate or generally match the ultrasonic velocity of the structure 40 which is to be inspected. In some embodiments, the structure 40 may be non-metallic. In some embodiments, the structure 40 may be a composite material and may include laminated composite plies 41. The structure 40 may include a countersunk opening 45 having countersunk surface 46 the slope or angle of which generally matches or corresponds to the slope or angle of the complementary angled plug surface 36 of the geometry-compensating plug 32a of the attachment 1a. An irregularity 38 such as a delamination, for example and without limitation, may exist in the structure 40 beneath the countersunk surface 46. In some embodiments, the geometry-compensating plug 32a and the structure 40 which is to be inspected may be the same or substantially the same material.

An ultrasonic transducer 12 may be placed against the top plug surface 37 of the geometry-compensating plug 32a. An indicator unit 14 may be connected to the ultrasonic transducer 12 through transducer wiring 13 or other suitable connection. An incident ultrasonic beam 15 may be transmitted from the ultrasonic transducer 12. The incident ultrasonic beam 15 may transmit through the interface which is formed by the angled plug surface 36 on the geometry-compensating plug 32a and the countersunk surface 46 on the structure 40 to the irregularity 38 in the structure 40. A reflected ultrasonic beam 16 may be reflected from the irregularity 38 through the interface between the countersunk surface 46 and the angled plug surface 36 back to the ultrasonic transducer 12. Based on the modified characteristics of the reflected ultrasonic beam 16 relative to the incident ultrasonic beam 15, the indicator unit 14 may indicate the presence of the irregularity 38 beneath the countersunk surface 46 on the structure 40. Transducer attachments 1b and 1c having geometry-compensating plugs 32b and 32c, respectively, of correspondingly reduced size or diameter are shown in FIGS. 3 and 4.

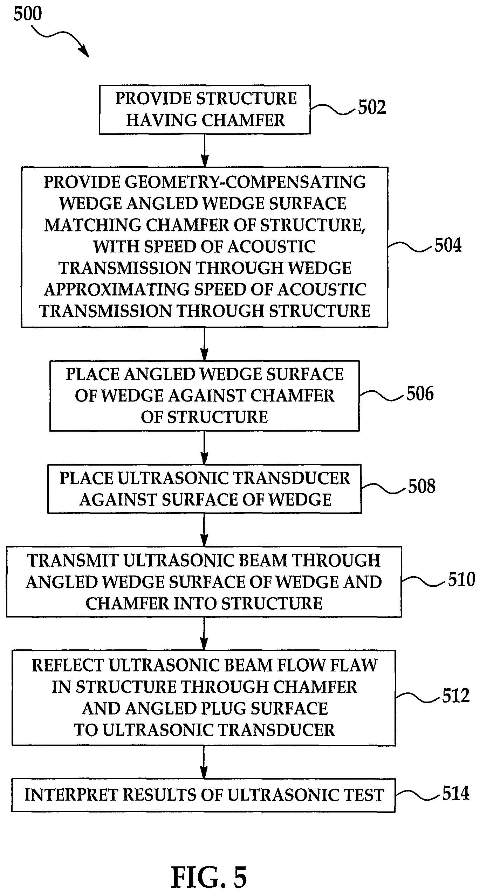

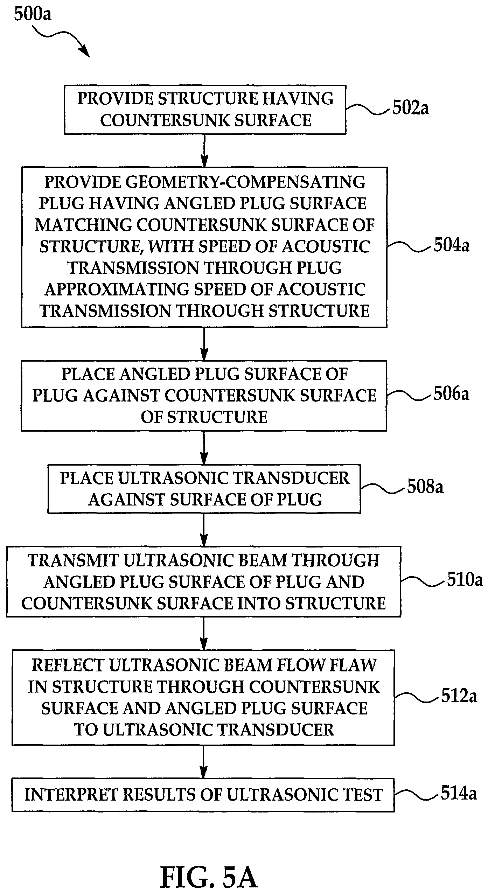

Referring next to FIG. 5, a flow diagram 500 of an illustrative embodiment of an ultrasonic inspection method is shown. In block 502, a structure having a chamfer is provided. In block 504, a geometry-compensating wedge having an angled wedge surface matching the chamfer of the structure is provided. The speed (acoustic velocity) of acoustic transmission through the wedge may approximate or generally match the speed of acoustic transmission through the structure. In block 506, the angled wedge surface of the wedge may be placed against the complementary chamfer of the structure. In block 508, an ultrasonic transducer may be placed against a surface of the wedge. In block 510, an ultrasonic beam may be transmitted through the angled wedge surface of the wedge and the chamfer into the structure. In block 512, the ultrasonic beam may be reflected from an irregularity in the structure and back through the chamfer and the angled wedge surface to the ultrasonic transducer. In block 514, the results of the ultrasonic test may be interpreted.

Referring next to FIG. 5A, a flow diagram 500a of an illustrative embodiment of an ultrasonic inspection method is shown. In block 502a, a structure having a countersunk surface is provided. In block 504a, a geometry-compensating plug having an angled plug surface matching the countersunk surface of the structure is provided. The speed of acoustic transmission through the plug (acoustic velocity) may approximate or generally match the speed of acoustic transmission through the structure. In block 506a, the angled plug surface of the plug may be placed against the complementary countersunk surface of the structure. In block 508a, an ultrasonic transducer may be placed against a surface of the plug. In block 510a, an ultrasonic beam may be transmitted through the angled plug surface of the plug and the countersunk surface into the structure. In block 512a, the ultrasonic beam may be reflected from an irregularity in the structure and back through the countersunk surface and the angled plug surface to the ultrasonic transducer. In block 514a, the results of the ultrasonic test may be interpreted.

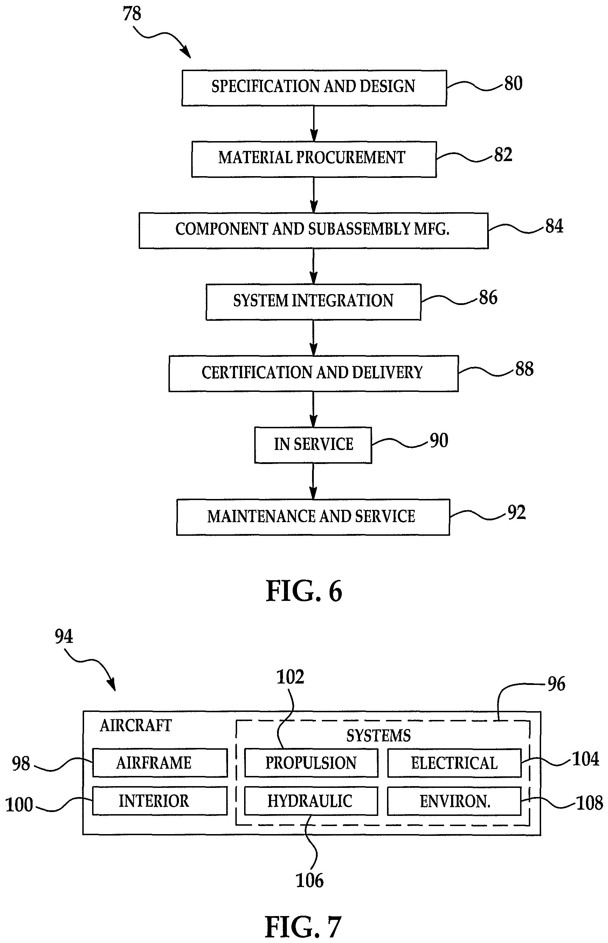

Referring next to FIGS. 6 and 7, embodiments of the disclosure may be used in the context of an aircraft manufacturing and service method 78 as shown in FIG. 6 and an aircraft 94 as shown in FIG. 7. During pre-production, exemplary method 78 may include specification and design 80 of the aircraft 94 and material procurement 82. During production, component and subassembly manufacturing 84 and system integration 86 of the aircraft 94 takes place. Thereafter, the aircraft 94 may go through certification and delivery 88 in order to be placed in service 90. While in service by a customer, the aircraft 94 may be scheduled for routine maintenance and service 92 (which may also include modification, reconfiguration, refurbishment, and so on).

Each of the processes of method 78 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 7, the aircraft 94 produced by exemplary method 78 may include an airframe 98 with a plurality of systems 96 and an interior 100. Examples of high-level systems 96 include one or more of a propulsion system 102, an electrical system 104, a hydraulic system 106, and an environmental system 108. Any number of other systems may be included. Although an aerospace example is shown, the principles of the invention may be applied to other industries, such as the automotive industry.

The apparatus embodied herein may be employed during any one or more of the stages of the production and service method 78. For example, components or subassemblies corresponding to production process 84 may be fabricated or manufactured in a manner similar to components or subassemblies produced while the aircraft 94 is in service. Also one or more apparatus embodiments may be utilized during the production stages 84 and 86, for example, by substantially expediting assembly of or reducing the cost of an aircraft 94. Similarly, one or more apparatus embodiments may be utilized while the aircraft 94 is in service, for example and without limitation, to maintenance and service 92.

Although the embodiments of this disclosure have been described with respect to certain exemplary embodiments, it is to be understood that the specific embodiments are for purposes of illustration and not limitation, as other variations will occur to those of skill in the art.

## Claims

1. A geometry-compensating transducer attachment (1) for ultrasonic inspection of a composite structure (20, 40), comprising:
a geometry-compensating structure having at least one complementary angled surface configured to engage a slope of the composite structure (20, 40) to be inspected, thereby restoring the composite structure (20, 40) to a plate-like configuration, the geometry-compensating structure comprises a plurality of composite plies, wherein the geometry-compensating structure and the composite structure (20, 40) to be inspected are the same material; and
the geometry-compensating structure having an acoustic velocity generally matching an acoustic velocity of the composite structure (20, 40) to be inspected.

2. The geometry-compensating transducer attachment (1) of claim 1 wherein the geometry-compensating structure is non-metallic.

3. The geometry-compensating transducer attachment (1) of claim 1 wherein the geometry-compensating structure comprises a geometry-compensating wedge (2).

4. The geometry-compensating transducer attachment (1) of claim 1 wherein the geometry-compensating structure comprises a geometry-compensating plug (32a).

5. An ultrasonic inspection method, comprising:
providing a composite structure to be inspected having a sloped surface;
providing a geometry-compensating structure having at least one complementary angled surface configured to engage the sloped surface on the composite structure (20, 40) to be inspected, the geometry-compensating structure comprising a plurality of composite plies, the geometry-compensating structure having an acoustic velocity generally matching an acoustic velocity of the structure (20, 40) to be inspected;
placing the angled surface of the geometry-compensating structure against the sloped surface of the structure (20, 40) to be inspected;
transmitting an ultrasonic beam through the geometry-compensating structure into the structure (20, 40) to be inspected, thereby restoring the composite structure (20, 40) to a plate-like configuration;
receiving the ultrasonic beam; and
interpreting results based on receiving the ultrasonic beam, wherein providing a composite structure (20, 40) to be inspected and providing a geometry-compensating structure comprises providing a composite structure (20, 40) to be inspected and providing a geometry-compensating structure of the same material.

6. The method of claim 5 wherein providing a geometry-compensating structure comprises providing a non-metallic geometry-compensating structure.

7. The method of claim 5 providing a geometry-compensating structure having at least one angled surface comprises providing a geometry-compensating wedge (2) having at least one angled surface.

8. The method of claim 5 providing a geometry-compensating structure having at least one angled surface comprises providing a geometry-compensating plug (32a) having at least one angled surface.

## Patentansprüche

1. Geometriekompensierende Transducer-Anbringung (1) für eine Ultraschallinspektion einer Verbundstruktur (20, 40), die aufweist:
eine geometriekompensierende Struktur, die zumindest eine komplementär angewinkelte Fläche aufweist, die eingerichtet ist, mit einer Neigung der Verbundstruktur (20, 40), die zu inspizieren ist, in Eingriff gebracht zu werden, wodurch die Verbundstruktur wieder in eine plattenförmige Konfiguration gebracht wird, wobei die geometriekompensierende Struktur eine Vielzahl von Verbundlagen aufweist, wobei die geometriekompensierende Struktur und die Verbundstruktur (20, 40), die zu inspizieren ist, aus dem gleichen Material sind; und
wobei die geometriekompensierende Struktur eine akustische Geschwindigkeit aufweist, die allgemein zu einer akustischen Geschwindigkeit der Verbundstruktur (20, 40) passt, die zu inspizieren ist.

2. Geometriekompensierende Transducer-Anbringung (1) nach Anspruch 1, wobei die geometriekompensierende Struktur nicht metallisch ist.

3. Geometriekompensierende Transducer-Anbringung (1) nach Anspruch 1, wobei die geometriekompensierende Struktur einen geometriekompensierenden Keil (2) aufweist.

4. Geometriekompensierende Transducer-Anbringung (1) nach Anspruch 1, wobei die geometriekompensierende Struktur einen geometriekompensierenden Stöpsel (32a) aufweist.

5. Ultraschallinspektionsverfahren, das aufweist:
Vorsehen einer zu inspizierenden Verbundstruktur mit einer geneigten Fläche;
Vorsehen einer geometriekompensierenden Struktur mit zumindest einer komplementär angewinkelten Fläche, die eingerichtet ist, mit der geneigten Fläche an der zu inspizierenden Verbundstruktur (20, 40) in Eingriff gebracht zu werden, wobei die geometriekompensierende Struktur eine Vielzahl von Verbundlagen aufweist, wobei die geometriekompensierende Struktur eine akustische Geschwindigkeit aufweist, die allgemein zu einer akustischen Geschwindigkeit der zu inspizierenden Struktur (20, 40) passt;
Platzieren der angewinkelten Fläche der geometriekompensierenden Struktur gegen die geneigte Fläche der zu inspizierenden Struktur (20, 40);
Übertragen eines Ultraschallstrahls durch die geometriekompensierende Struktur in die zu inspizierende Struktur (20, 40), wodurch die Verbundstruktur (20, 40) wieder in eine plattenförmige Konfiguration gebracht wird;
Empfangen des Ultraschallstrahls; und
Interpretieren von Ergebnissen basierend auf einem Empfangen des Ultraschallstrahls, wobei ein Vorsehen einer zu inspizierenden Verbundstruktur (20, 40) und ein Vorsehen einer geometriekompensierenden Struktur ein Vorsehen einer zu inspizierenden Verbundstruktur (20, 40) ein Vorsehen einer geometriekompensierenden Struktur aus dem gleichen Material aufweist.

6. Verfahren nach Anspruch 5, wobei ein Vorsehen einer geometriekompensierenden Struktur ein Vorsehen einer geometriekompensierenden Struktur aufweist, die nicht metallisch ist.

7. Verfahren nach Anspruch 5, wobei ein Vorsehen einer geometriekompensierenden Struktur mit zumindest einer angewinkelten Fläche ein Vorsehen eines geometriekompensierenden Keils (2) mit zumindest einer angewinkelten Fläche aufweist.

8. Verfahren nach Anspruch 5, wobei ein Vorsehen einer geometriekompensierenden Struktur mit zumindest einer angewinkelten Fläche ein Vorsehen eines geometriekompensierenden Stöpsels (32a) mit zumindest einer angewinkelten Fläche aufweist.

## Revendications

1. Fixation de transducteur de compensation de géométrie (1) pour l'inspection ultrasonore d'une structure composite (20, 40), comprenant :
une structure de compensation de géométrie ayant au moins une surface inclinée complémentaire configurée pour venir en prise avec une pente de la structure composite (20, 40) devant être inspectée, ce qui permet de restaurer la structure composite (20, 40) à une configuration en forme de plaque, la structure de compensation de géométrie comprenant une pluralité de couches composites, la structure de compensation de géométrie et la structure composite (20, 40) devant être inspectée étant le même matériau ; et
la structure de compensation de géométrie ayant une vitesse acoustique correspondant généralement à une vitesse acoustique de la structure composite (20, 40) devant être inspectée.

2. Fixation de transducteur de compensation de géométrie (1) selon la revendication 1, la structure de compensation de géométrie étant non métallique.

3. Fixation de transducteur de compensation de géométrie (1) selon la revendication 1, la structure de compensation de géométrie comprenant une cale de compensation de géométrie (2).

4. Fixation de transducteur de compensation de géométrie (1) selon la revendication 1, la structure de compensation de géométrie comprenant une fiche de compensation de géométrie (32a).

5. Procédé d'inspection ultrasonore, comprenant :
la fourniture d'une structure composite devant être inspectée ayant une surface inclinée ;
la fourniture d'une structure de compensation de géométrie ayant au moins une surface inclinée complémentaire configurée pour venir en prise avec la surface inclinée sur la structure composite (20, 40) devant être inspectée, la structure de compensation de géométrie comprenant une pluralité de couches composites, la structure de compensation de géométrie ayant une vitesse acoustique correspondant généralement à une vitesse acoustique de la structure (20, 40) devant être inspectée ;
le placement de la surface inclinée de la structure de compensation de géométrie contre la surface inclinée de la structure (20, 40) devant être inspectée ;
la transmission d'un faisceau ultrasonore à travers la structure de compensation de géométrie dans la structure (20, 40) devant être inspectée, ce qui permet de restaurer la structure composite (20, 40) en une configuration de type plaque ;
la réception du faisceau ultrasonore ; et
l'interprétation des résultats sur la base de la réception du faisceau ultrasonore, la fourniture d'une structure composite (20, 40) devant être inspectée et la fourniture d'une structure de compensation de géométrie comprenant la fourniture d'une structure composite (20, 40) devant être inspectée et la fourniture d'une structure de compensation de géométrie du même matériau.

6. Procédé selon la revendication 5, la fourniture d'une structure de compensation de géométrie comprenant la fourniture d'une structure de compensation de géométrie non métallique.

7. Procédé selon la revendication 5, fournissant une structure de compensation de géométrie ayant au moins une surface inclinée comprenant la fourniture d'une cale de compensation de géométrie (2) ayant au moins une surface inclinée.

8. Procédé selon la revendication 5, fournissant une structure de compensation de géométrie ayant au moins une surface inclinée comprenant la fourniture d'une fiche de compensation de géométrie (32a) ayant au moins une surface inclinée.
